# EUROPÄISCHE PATENTSCHRIFT

(11) **EP 3 399 115 B1**
(45) Veröffentlichungstag und Bekanntmachung des Hinweises auf die Patenterteilung: **05.06.2019**
(21) Anmeldenummer: 17169210.6
(22) Anmeldetag: 03.05.2017
(51) Int. Cl.: E03F 5/10, F16K 31/30, E02B 8/04

(54) **ABFLUSSMENGENREGLER FÜR EINEN AUSLAUF EINES FLÜSSIGKEITSBEHÄLTERS**
FLOW RATE REGULATOR FOR AN OUTLET OF A LIQUID CONTAINER
DÉBITMÈTRE POUR LA SORTIE D'UN RÉCIPIENT DE LIQUIDE

(43) Veröffentlichungstag der Anmeldung: 07.11.2018
(73) Patentinhaber: Steinhardt, Jörg-Michael, 65232 Taunusstein (DE)
(72) Erfinder: Steinhardt, Jörg-Michael, 65232 Taunusstein (DE)
(74) Vertreter: Quermann, Helmut

(56) Entgegenhaltungen:
- EP-A1- 3 109 368
- EP-A2- 0 132 775
- DE-A1- 2 523 942
- DE-A1- 3 418 348
- DE-A1- 3 844 586

## Beschreibung

Die Erfindung betrifft einen Abflussmengenregler gemäß dem Oberbegriff des Anspruchs 1.

Ein derartiger Abflussmengenregler ist aus der EP 3 109 368 A1 bekannt. Dieses Dokument wird als nächstliegender Stand der Technik angesehen. Bei diesem Abflussmengenregler ist ein Zugmittelgetriebe zum Übertragen der Bewegung des Schwimmers bei einem Flüssigkeitseinstau auf die Blende beschrieben. Ein Rad des Zugmittelgetriebes ist mittels des Schwimmers antreibbar und die Blende mittels des anderen Rads des Zugmittelgetriebes.

In einer in dieser Schrift beschriebenen Ausführungsform bildet das andere Rad eine Basisscheibe, mit der eine Steuerscheibe verbunden ist. Diese weist eine Steuerkante auf. Auf der Steuerkante reitet eine vertikal angeordnete Aufhängung in einem oberen Bereich der Aufhängung. In einem unteren Bereich der Aufhängung ist mit dieser die Blende fest verbunden. Die Steuerscheibe ist bezüglich der Basisscheibe demontierbar. Sie kann in unterschiedlichen Schwenkstellungen, jeweils bezüglich der horizontal angeordneten Achse der Basisscheibe verschwenkt positioniert und in der jeweils neuen Position mit der Basisscheibe wieder verbunden, insbesondere verschraubt werden. Durch diese Relativverschiebung von Basisscheibe und Steuerscheibe um die horizontal angeordnete Achse der Basisscheibe ist nur eine Veränderung der Hubhöhe der Blende, somit insbesondere eine Veränderung der anfänglichen Abblendung der Auslauföffnung möglich.

Eine andere in dieser Schrift beschriebene Ausführungsform zeigt eine unmittelbar mit der Basisscheibe verbundene Blende, womit die Steuerscheibe die Blende bildet und die Steuerkante der Steuerscheibe eine Abblendkante der Blende bildet. Auch hierbei ist die Blende ausschließlich um die horizontal angeordnete Achse der Basisscheibe bezüglich der Basisscheibe verdrehbar und in unterschiedlichen Drehpositionen mit der Basisscheibe verbindbar, insbesondere verschraubbar. Auch bei dieser Variante lässt sich die Abblendcharakteristik nur in engem Rahmen ändern.

Andere Abflussmengenregler sind in Dokument DE3844586, DE3418348, EP0132775 oder DE2523942 offenbart.

Aufgabe der vorliegenden Erfindung ist es, einen Abflussmengenregler der eingangs genannten Art so weiterzubilden, dass dieser einerseits universell einsetzbar ist und modular gebildet werden kann, sowie andererseits sich die Abblendcharakteristik weitreichend mittels dieses Abflussmengenreglers verändern lässt.

Gelöst wird die Aufgabe durch einen Abflussmengenregler, der gemäß den Merkmalen des Patentanspruchs 1 ausgebildet ist.

Bei dem erfindungsgemäßen Abflussmengenregler ist vorgesehen, dass die Steuerscheibe derart in den unterschiedlichen Positionen mit der Basisscheibe verbindbar ist, dass der Abstand mehrerer Punkte der Steuerkurve zur Achse der Basisscheibe verändert ist.

Im Gegensatz zu dem bekannten Abflussmengenregler, bei dem die Relativverschwenkung von Steuerscheibe und Blendscheibe darauf beschränkt ist, dass die Steuerscheibe ausschließlich um die horizontal angeordnete Achse der Basisscheibe schwenkbar ist, kann bei dem erfindungsgemäßen Abflussmengenregler die Position der Steuerscheibe wesentlich freier bezüglich der ausschließlich um die horizontal angeordnete Achse schwenkbaren Basisscheibe verändert werden, sodass die Abflusscharakteristik vielfältig modifiziert werden kann. Hierbei ist es ausreichend, wenn auch nur zwei Punkte der Steuerkurve, somit zwei Punkte die entlang der Steuerkurve zu definieren sind, zur Achse der Basisscheibe verändert werden können.

Diese Gestaltung des Abflussmengenreglers ermöglicht einen universellen Einsatz des Abflussmengenreglers. Je nach gewünschtem Abflussverhalten kann eine definierte Position von Steuerscheibe bezüglich der Basisscheibe eingestellt werden. Da mittels dieses Abflussmengenreglers unterschiedliche Abflusscharakteristika dargestellt werden können, ist der Abflussmengenregler hervorragend für einen modularen Einsatz geeignet. Er kann bei grundsätzlich gleichem Aufbau, ausschließlich bei Modifizierung der Position der Steuerscheibe bezüglich der Basisscheibe, für unterschiedliche Einsatzzwecke und somit unterschiedliche Abblendcharakteristika unterschiedlicher Flüssigkeitsbehälter verwendet werden.

Es wird als besonders vorteilhaft angesehen, wenn der Abstand der mehreren Punkte der Steuerkurve zur Achse der Basisscheibe durch Verschieben der Steuerscheibe mit einer Komponente in Radialrichtung bezüglich der Achse der Basisscheibe verändert ist. Eine solche Verschiebemöglichkeit mit einer Komponente in Radialrichtung ermöglicht auf baulich einfachste Art und Weise die Abblendcharakteristik zu verändern. Wesentlich ist die Veränderbarkeit der Steuerscheibe bezüglich der Basisscheibe mit der Komponente in Radialrichtung, im Gegensatz zu der ausschließlichen Verdrehmöglichkeit gemäß dem beschriebenen Stand der Technik. Es ist durchaus ausreichend, wenn die Verschiebung der Steuerkurve statt mit einer Komponente in Radialrichtung ausschließlich in Radialrichtung erfolgt. Dies reicht bereits aus, um die beschriebenen vorteilhaften Ergebnisse zu erzielen.

Alternativ zu dieser Verschiebbarkeit mit einer Komponente in Radialrichtung oder zusätzlich kann vorgesehen sein, dass der Abstand der mehreren Punkte der Steuerkurve zur Achse der Basisscheibe durch Schwenken der Steuerscheibe um eine Achse, die parallel um den Abstand zur Achse der Basisscheibe angeordnet ist, verändert ist. Diese letztgenannte Schwenkbarkeit der Steuerscheibe ermöglicht es insbesondere, die Abflusscharakteristik über die Länge der Steuerkurve zu verändern, beispielsweise eine stärkere frühere Abblendung herbeizuführen, die zum Ende der Abblendung schwächer wird.

Als besonders vorteilhaft wird die Überlagerung der Veränderbarkeit der Position der Steuerscheibe zur Basisscheibe mit der Komponente in Radialrichtung und mit der Schwenkbarkeit der Steuerscheibe um die Achse, die parallel und in Abstand zur Achse der Basisscheibe angeordnet ist, angesehen.

Die Anordnung von Basisscheibe und Steuerscheibe kann, um diese im erfindungsgemäßen Sinne in unterschiedlichen Positionen miteinander verbinden zu können, unterschiedlich gestaltet sein.

Bei einer baulich besonders einfach gestalteten Ausführungsform weisen die Basisscheibe und die Steuerscheibe in einem Überlappungsbereich jeweils ein Lochmuster auf und es ist die Basisscheibe und die Steuerscheibe entsprechend der Lochanordnung der Lochmuster in unterschiedlichen Stellungen mittels Verbindungsmitteln miteinander verbunden. Für jede definierte Stellung sind insbesondere zwei Paare miteinander fluchtender Löcher von Basisscheibe und Steuerscheibe vorgesehen, wobei durch das jeweilige durch die beiden Löcher gebildete Paar eine Schraube gesteckt wird, die mittels einer Mutter gesichert wird. Auf diese Art und Weise ist in der gewünschten Relativposition von Steuerscheibe und Basisscheibe deren feste Verbindung gewährleistet. Die Steuerscheibe und die Basisscheibe bilden dann eine stabile Einheit, insbesondere, weil sie im Überlappungsbereich miteinander verbunden sind.

Bei einer anderen Ausführungsform ist vorgesehen, dass die Basisscheibe und die Steuerscheibe überlappend ineinander verschieblich gelagert sind und in der Basisscheibe und der Steuerscheibe gelagerte Mittel zum Verstellen der Steuerscheibe bezüglich der Basisscheibe vorgesehen sind. Somit ist keine aufwendigere Demontage und Montage der Verbindungsmittel von Basisscheibe und Steuerscheibe erforderlich. Stattdessen ist es nur notwendig, die Steuerscheibe bezüglich der Basisscheibe durch die in diesen gelagerten Mittel zu verstellen. Konkret können diese Mittel eine Stellschraube aufweisen, die zwischen der Steuerscheibe und der Basisscheibe wirksam ist.

Üblicherweise ist die Basisscheibe mit dem Schwimmer bewegungsgekoppelt. Dies kann dadurch erfolgen, dass die Basisscheibe fest mit dem Schwimmer verbunden ist, insbesondere der Schwimmer unmittelbar mit der Basisscheibe verbunden ist oder der Schwimmer über einen mit diesem verbundenen Hebel mit der Basisscheibe verbunden ist. Es ist aber durchaus möglich, dass der Schwimmer über ein Getriebe, wie es beispielsweise aus der EP 3 109 368 A1 bekannt ist, auf die Basisscheibe einwirkt.

Es wird als besonders vorteilhaft angesehen, wenn die Steuerscheibe die Blende bildet und die Steuerkante eine Abblendkante der Blende bildet. Demzufolge ist die Steuerscheibe unmittelbar der Auslauföffnung zugeordnet und dient dem variablen Abblenden der Auslauföffnung. Die universelle Verstellbarkeit der Blende bzw. Steuerscheibe zur Basisscheibe ermöglicht eine präzise, optimale Einstellung der Abblendcharakteristik, insbesondere um über die gesamte Einstauhöhe des Schwimmers einen konstanten Abfluss aus der Auslauföffnung, somit einen konstanten Volumenstrom, der durch die Auslauföffnung gelangt, zu gewährleisten.

Die Blende ist vorzugsweise derart gestaltet, dass sie sich mit deren Abblendkante über einen Teilkreis erstreckt. Es ist somit nicht erforderlich, dass die Blende bzw. deren Abblendkante sich über einen größeren Teilkreiswinkel erstreckt. Insbesondere erstreckt sich die Blende mit deren Abblendkante maximal über einen Viertelkreis.

Bei einer anderen Gestaltung ist vorgesehen, dass eine vertikal angeordnete Aufhängung, in einem oberen Bereich der Aufhängung, die Steuerscheibe im Bereich deren Steuerkante kontaktiert, sowie mit der Aufhängung, in einem unteren Bereich der Aufhängung, die Blende fest verbunden ist. Bei dieser Gestaltung kann die Blende nur vertikal bewegt werden, wobei die Bewegung der Blende in Abhängigkeit von der Hubbewegung des Schwimmers aufgrund der Relativverstellbarkeit von Steuerscheibe und Aufhängung möglich ist.

Für den Fall, dass die Steuerkurve eine Abblendkante der Blende bildet, wird es als besonders vorteilhaft angesehen, wenn die Steuerkurve bzw. die Abblendkante mit Wendepunkt ausgebildet ist. Dies ermöglicht es insbesondere, das Abblendverhalten der Blende bei hohen Einstauhöhen zu optimieren. Befindet sich der Schwimmer im Bereich seiner maximal angehobenen Position, kann durch diese Gestaltung der Blende mit Wendepunkt eine stärkere Abblendung erzeugt werden, sodass dann, wenn der Schwimmer nicht weiter aufschwimmen kann und dennoch der Flüssigkeitsspiegel weiter steigt, erst später der vorherige, im Wesentlichen konstante Massendurchsatz erreicht wird. Bei Ausbildung der Steuerkurve bei einer Steuerscheibe, die mit der Aufhängung für die Blende zusammenwirkt, ist in aller Regel nur die Ausbildung der Steuerkurve ohne Wendepunkt verwirklicht.

Die Steuerscheibe wird in aller Regel einteilig ausgebildet sein. Es ist aber durchaus denkbar, dass die Steuerscheibe durch mehrere, in Schwenkrichtung der Steuerscheibe nebeneinander angeordnete Segmente gebildet ist. Diese Segmente, die dicht an dicht positioniert sind, erlauben wegen deren einzelnen, individuell zur Basisscheibe möglichen Anordnung eine noch präzisere Einstellung einer gewünschten Abflusscharakteristik.

Weitere Merkmale der Erfindung sind in der Beschreibung der Zeichnung der Figuren, den Figuren und in den Unteransprüchen dargestellt, wobei bemerkt wird, dass alle Einzelmerkmale und Kombinationen von Einzelmerkmalen erfindungswesentlich sind.

In der Zeichnung ist die Erfindung anhand mehrerer Ausführungsformen beispielsweise dargestellt, ohne auf diese Ausführungsformen beschränkt zu sein.

Es zeigt:
- Fig. 1: ein erstes Ausführungsbeispiel des Abflussmengenreglers, bei vollständig abgesenktem Schwimmer veranschaulicht, gesehen im Wesentlichen in der Ausströmrichtung der Flüssigkeit durch die Auslauföffnung,
- Fig. 2: den Abflussmengenregler in der vollständig abgeblendeten Stellung,
- Fig. 3: den Abflussmengenregler in teilweiser demontierter Stellung, allerdings veranschaulicht ohne Schwimmer und ohne Steuerscheibe bzw. Blende,
- Fig. 4: den in Fig. 3 gezeigten Teil des Abflussmengenreglers in montiertem Zustand,
- Fig. 5: eine Stirnansicht des Abflussmengenreglers, in einer Stellung gemäß Fig. 1, in der Ausströmrichtung der Flüssigkeit durch die Auslauföffnung gesehen,
- Fig. 6: eine Darstellung gemäß Fig. 5, wobei die unterschiedlichen Befestigungsmöglichkeiten der Steuerscheibe bzw. Blende an der Basisscheibe sowohl für den Bereich der Basisscheibe als auch für den Bereich der Steuerscheibe veranschaulicht sind,
- Fig. 7: die Ansicht des Abflussmengenreglers gemäß Fig. 5, allerdings bei demontierter Steuerscheibe bzw. Blende,
- Fig. 8: ein zweites Ausführungsbeispiel des Abflussmengenreglers in einer Darstellung gemäß Fig. 5,
- Fig. 9: den Abflussmengenregler in einer Ansicht gemäß Fig. 8, allerdings ohne Blende veranschaulicht,
- Fig. 10: ein drittes Ausführungsbeispiel des Abflussmengenreglers, veranschaulicht in einer Ansicht gemäß Fig. 8,
- Fig. 11: ein viertes Ausführungsbeispiel des Abflussmengenreglers, veranschaulicht in einer Ansicht gemäß Fig. 10,
- Fig. 12: ein fünftes Ausführungsbeispiel des Abflussmengenreglers, bei dem die Steuerscheibe und die Blende separate Funktionselemente darstellen.

### Figurenbeschreibung

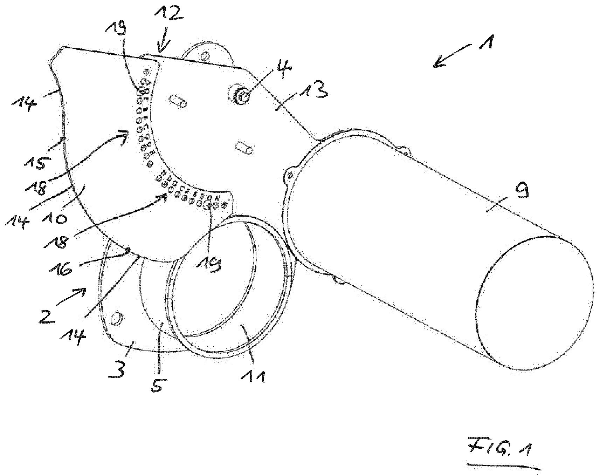

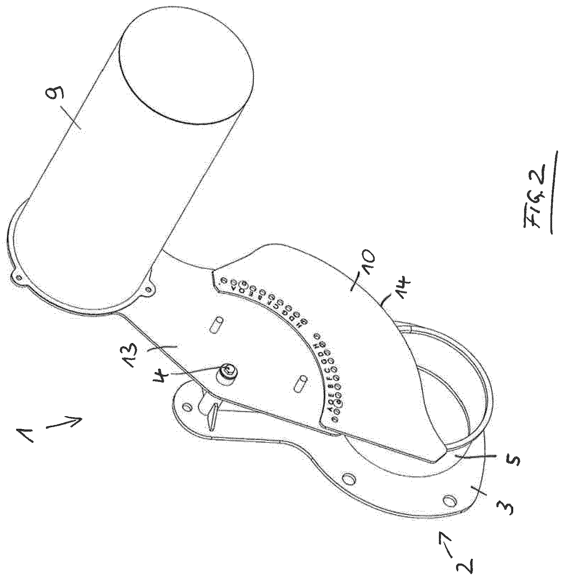

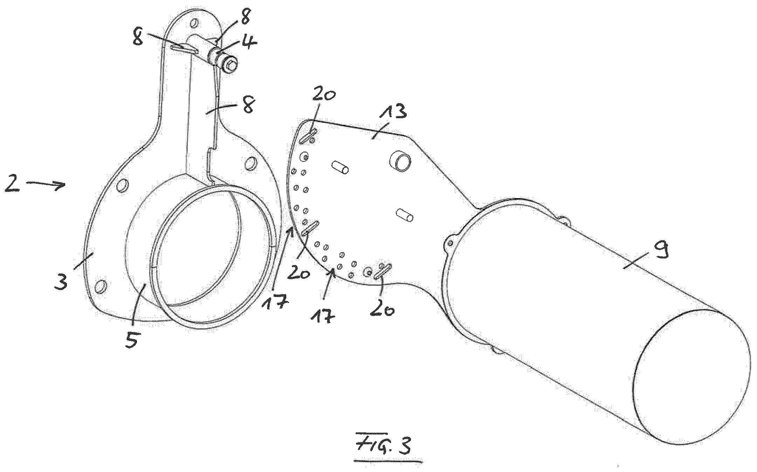

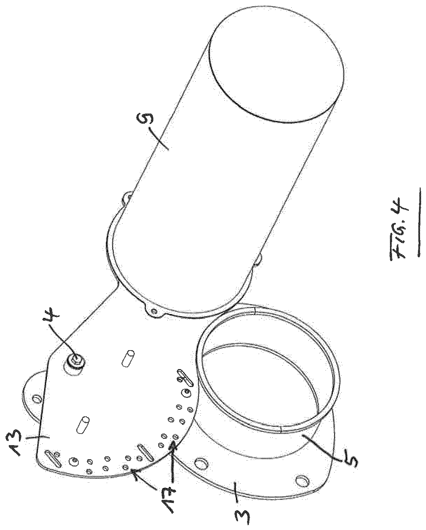

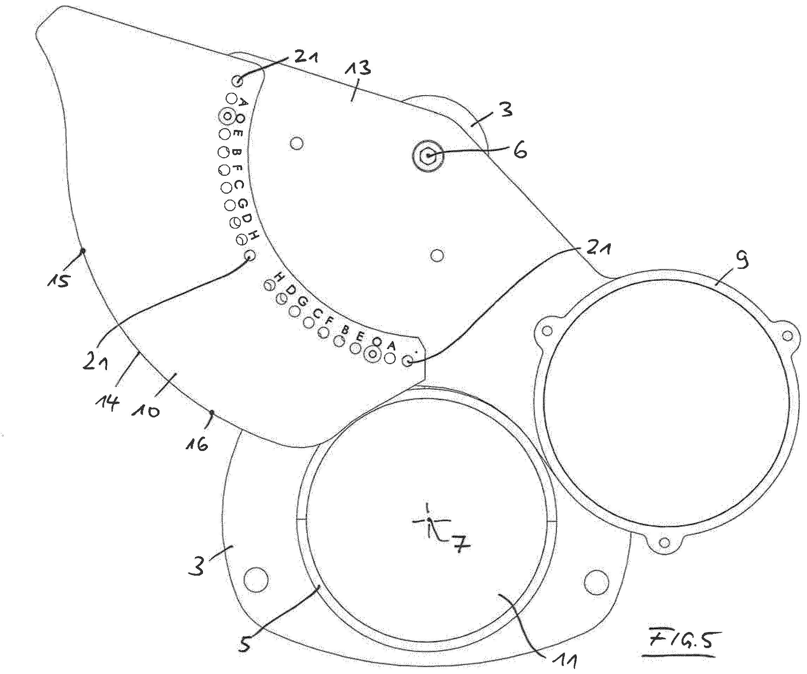

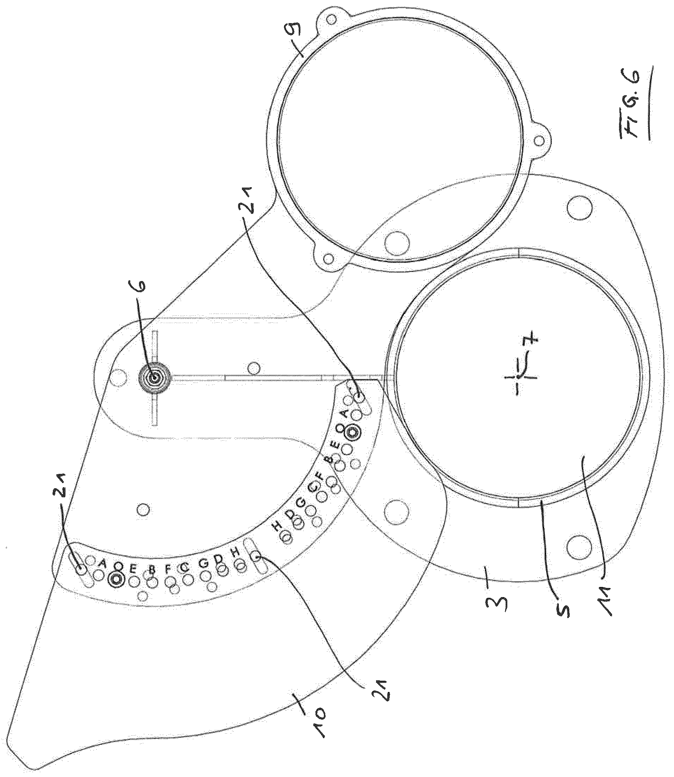

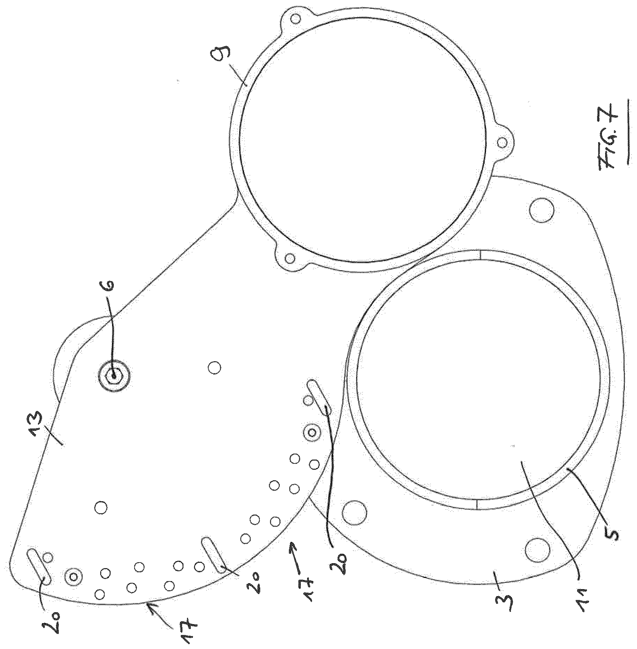

Ein Abflussmengenregler 1 für einen Auslauf eines Flüssigkeitsbehälters, insbesondere eines Beckens gemäß dem in den Fig. 1 bis 7 veranschaulichten Ausführungsbeispiel besteht im Wesentlichen aus Edelstahl. Ein Basiselement 2 des Abflussmengenreglers 1 weist eine Grundplatte 3, eine Lagerachse 4 sowie einen Rohrstutzen 5 auf. Die Lagerachse 4 und der Rohrstutzen 5 erstrecken sich mit ihren jeweiligen Längsachsen - Rotationsachsen - 6, 7 senkrecht zur Grundplatte 3. Die Lagerachse 4, die zur Grundplatte 3 hin erweiternd abgestuft ausgebildet ist, ist mit der Grundplatte 3 verschweißt. Der Rohrstutzen 5 ist gleichfalls mit der Grundplatte 3 verschweißt. Der Rohrstutzen 5 dient dem Durchleiten der Flüssigkeit, die durch den Rohrstutzen 5 in ein entsprechend dem Durchmesser des Rohrstutzens 5 ausgebildetes ein Loch in einer Wand des Beckens gelangt und von dort aus dem Becken austritt. Die plattenförmige Grundplatte 3 ist mittels diverser nicht veranschaulichter Schrauben durch diese Wand des Beckens hindurch verbolzt. Verstärkungsbleche 8 verstärken die Verbindung von Lagerachse 4 und Grundplatte 3 bzw. von Rohrstutzen 5 und Grundplatte 3. Die Achsen 6 und 7 verlaufen horizontal, senkrecht zur Wand des Beckens.

Der Abflussmengenregler 1 weist ferner einen Schwimmer 9 und eine mittels des Schwimmers 9 ansteuerbare Blende, nachfolgend als Steuerscheibe 10 bezeichnet, zum veränderlichen Abblenden der Öffnung 11 des Rohrstutzens 5 auf. Ferner weist der Abflussmengenregler 1 Mittel 12 zum Verändern der Abflusscharakteristik der Steuerscheibe 10 bzw. Blende auf. Diese Mittel 12 weisen eine vom Schwimmer 9 ansteuerbare, um die stationäre, horizontal angeordnete Achse 6 schwenkbare Basisscheibe 13 und die in unterschiedlichen Positionen bezüglich dieser Basisscheibe 13 anordbare, mit der Basisscheibe 13 verbundene Steuerscheibe 10 auf. Diese Steuerscheibe 10 ist mit einer Steuerkante 14 versehen. Da die Steuerscheibe 10 die Blende bildet, bildet die Steuerkurve 14 die Abblendkante der Blende.

Die Steuerscheibe 10 ist derart in unterschiedlichen Positionen mit der Basisscheibe 13 verbindbar, dass der Abstand mehrerer Punkte der Steuerkurve 14, vorliegend beispielsweise der beiden eingezeichneten Punkte 15 und 16 der Steuerkurve 14, zur Achse 6 der Basisscheibe 13 verändert ist.

Die Basisscheibe 13 und die Steuerscheibe 10 weisen in einem Überlappungsbereich jeweils ein Lochmuster 17, 18 auf und es sind die Basisscheibe 13 und die Steuerscheibe 10 entsprechend der Lochanordnung der Lochmuster 17, 18 in unterschiedlichen Stellungen mittels Verbindungsmitteln miteinander verbindbar. Es sind jeweils zwei Verbindungsmittel zum Verbinden von Basisscheibe 13 und Steuerscheibe 10 vorgesehen. Konkret durchsetzt jeweils eine Schraube 19 fluchtende Durchgangslöcher in der Steuerscheibe 10 und der Basisscheibe 13 und es ist die Schraube 19 mittels einer Mutter gesichert. Die Steuerscheibe 10 ist bezüglich der stationär gelagerten Basisscheibe 13 geradlinig verschiebbar. Hierzu weist die Basisscheibe 13 parallel zueinander angeordnete, sich längs erstreckende Durchgangsschlitze 20 auf, in die fest mit der Steuerscheibe 10 verbundene Stifte 21 ragen. Somit kann die Steuerscheibe 10 bezüglich der Basisscheibe 13 in Richtung der Längserstreckung der Durchgangsschlitze 20 verschoben werden. Gemäß dem Lochmuster 18 der Steuerscheibe 10 sind verschiedene Referenzmarkierungen A bis H vorgesehen sowie eine Ausgangsmarkierung O-O. Bei Erreichen eines definierten Verschiebezustands der Steuerscheibe 10 fluchten die Löcher A, A mit diesem Verschiebezustand konkret zugeordneten zwei Löchern der Basisscheibe 13, sodass durch diese beiden Lochpaare die beiden Schrauben 19 zum Verbinden von Steuerscheibe 10 und Basisscheibe 13 gesteckt werden können. In einer anderen Position fluchten beispielsweise die Löcher E, E der Steuerscheibe 10 mit konkret zwei diesen zugeordneten Löchern der Basisscheibe 13, sodass in diesem Fall durch diese beiden Lochpaare die Schrauben 19 durchgesteckt werden können, zwecks Verbinden der Steuerscheibe und der Basisscheibe 13 in dieser Relativposition von Steuerscheibe 10 und Basisscheibe 13.

Bei einer Grundstellung O-O ergibt sich somit bei einem Flüssigkeitseinstau eine im Wesentlichen konstante Abflusskurve mit einem Durchsatz von beispielsweise 30 Liter pro Sekunde durch die Öffnung 11. In einer Stellung A-A, bei einer Relativverschiebung von Steuerscheibe 10 und Basisscheibe 13 von beispielsweise 14 mm ergibt sich ein um 20 % höherer Durchsatz, somit von etwa 36 l/sec. Die Zustände B-B, C-C und D-D stellen Zwischenstellungen zwischen diesem erhöhten Durchsatz und dem Grunddurchsatz gemäß Stellung O-O dar. Soll ein geringerer Durchsatz erreicht werden, beispielsweise ein Durchsatz gegenüber der Grundstellung von 20 % weniger, somit etwa 24 l/sec, wird die Stellung E-E gewählt. Die Stellungen F-F, G-G und H-H stellen Zwischenstellung zwischen diesem minimalen Abfluss von 24 l/sec und dem Abfluss gemäß Grundstellung von 30 l/sec dar.

Bei dieser beschriebenen Version mit fester Lochung ist somit eine parallele Abflusskurvenverstellung von ± 20 % möglich. Wegen der festen Lochung ist diese Verstellung nicht stufenlos möglich.

Die genauso wie die Steuerscheibe 10 als Platte ausgebildete Basisscheibe 13 ist in Art eines Hebels ausgebildet, demnach über den Schwenkpunkt der Basisscheibe 13, somit über die Lagerachse 4 hinaus verlängert. Im Bereich des der Steuerscheibe 10 abgewandten Endes nimmt die Basisscheibe 13 den Schwimmer 9 auf, der mit der Basisscheibe 13 verschraubt ist. Der Schwimmer 9 ist als Zylinder ausgebildet, wobei die Zylinderachse parallel zu den Achsen 6 und 7 angeordnet ist.

Bei dieser beschriebenen Ausführungsform lässt sich der Abstand der mehreren Punkte der Steuerkurve 14, wobei nur zwei Punkte, nämlich die Punkte 15 und 16 wiedergegeben ist, durch Verschieben der Steuerscheibe 10 mit einer Komponente in Radialrichtung bezüglich der Achse 6 der Basisscheibe 13 verändern. Grundsätzlich bestünde auch die Möglichkeit, eine veränderliche Lagerung der Steuerscheibe 10 in der Basisscheibe 13 derart vorzusehen, dass der Abstand der mehreren Punkte, vorliegend der Punkte 15 und 16, der Steuerkurve 14 zur Achse 6 der Basisscheibe 13 durch Schwenken der Steuerscheibe 10 um eine Achse, die parallel und in Abstand zur Achse 6 der Basisscheibe 13 angeordnet ist, verändert wird. In diesem Fall wäre insbesondere vorgesehen, dass die Durchgangsschlitze 20 und die mit diesen zusammenwirkenden Stifte 21 entfallen und die Steuerscheibe 10, um die genannte Achse gedreht, entsprechend zusammenwirkender Löcher der Lochmuster 17, 18 und Lochpaare durchsetzender Schrauben verbunden wird.

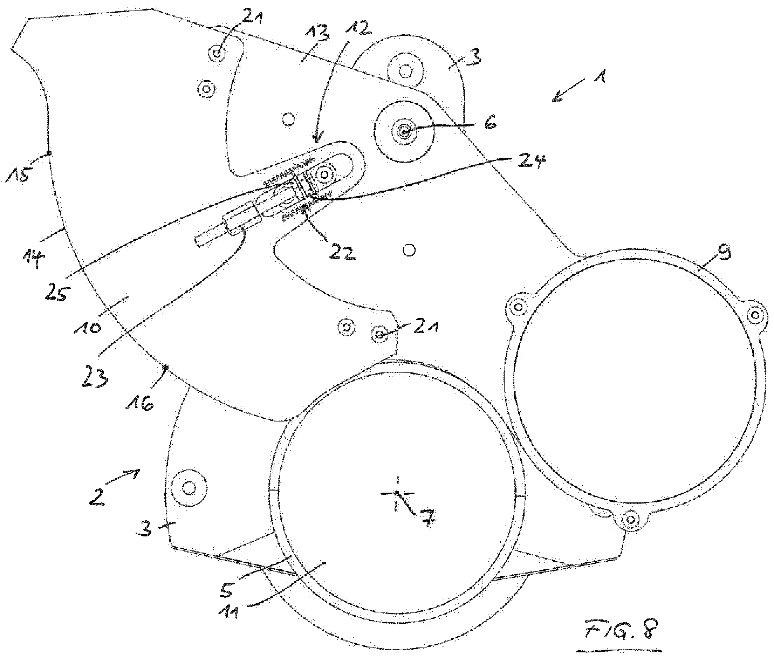

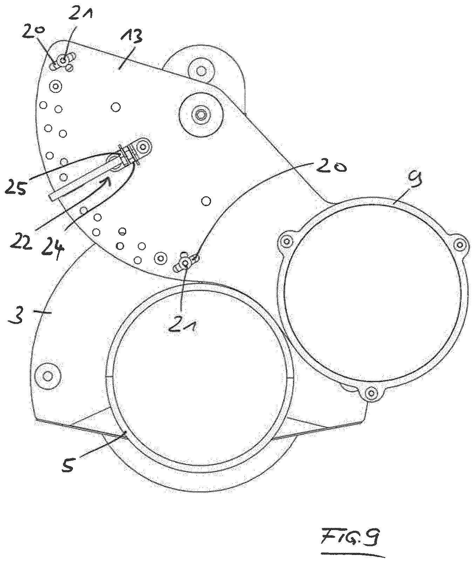

Das Ausführungsbeispiel gemäß der Fig. 8 und 9 unterscheidet sich von demjenigen nach den Fig. 1 bis 7 dadurch, dass eine Verstellung der Steuerscheibe 10 bezüglich der Basisscheibe 13 über eine Stellschraube 22 erfolgt, die im Bereich eines Endes drehbar, aber axial festgelegt, in der Basisscheibe 13 gelagert und in eine mit der Steuerscheibe 10 verbundene Mutter 23 eingeschraubt ist. Durch Drehen der Stellschraube 22 im Bereich eines Sechskant-Schraubenkopfes 24 lässt sich die Verschiebung der Steuerscheibe 10 bezüglich der Basisscheibe 13 herbeiführen. Diese Verschiebung ist geradlinig aufgrund des Eingriffs der mit der Steuerscheibe 10 verbundenen Stifte 21 in die in der Basisscheibe 13 ausgebildeten Durchgangsschlitze 20. Eine Kontermutter 25 dient dem Festlegen der Stellschraube 22.

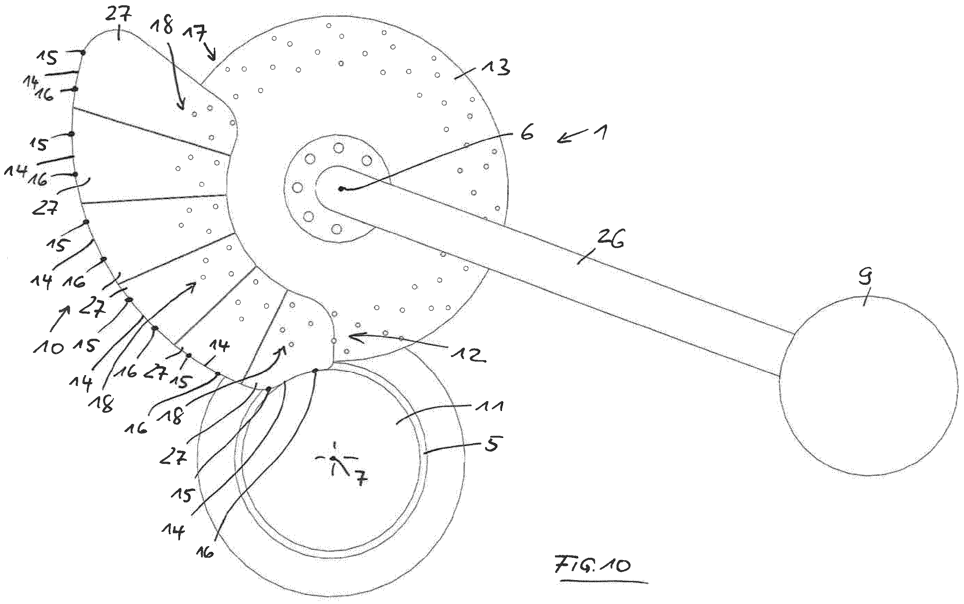

Das Ausführungsbeispiel gemäß der Fig. 10 unterscheidet sich von demjenigen nach den zuvor beschriebenen Ausführungsbeispielen dadurch, dass der Schwimmer 9 nicht unmittelbar mit der Basisscheibe 13 verbunden ist, sondern über einen Hebelarm 26. Dieser Hebelarm greift zentral an der Basisscheibe 13 an, somit konzentrisch zur Rotationsachse 6. Die Basisscheibe 13 erstreckt sich über einen Vollkreis und ist über den Vollkreis mit dem Lochmuster 17 versehen. Die Steuerscheibe 10, die die Blende bildet, ist mehrteilig gestaltet, aus mehreren unterschiedlich gestalteten, plattenförmigen Segmenten 27, denen jeweils Lochmuster 18 zugeordnet sind, sodass die Steuerscheibe 10, somit die Blende, in unterschiedlichen Positionen mit der Basisscheibe 13 verbunden, insbesondere verschraubt werden kann. Dies derart, dass in unterschiedlichen Positionen der Abstand mehrerer Punkte der Steuerkurve, konkret mehrerer Punkte der Steuerkurve 14 im Bereich der Segmente 27 zur Achse 6 der Basisscheibe 13 verändert ist. Hierbei kann der Abstand der mehreren Punkte 15, 16 der Steuerkurve 14 zur Achse 6 durch Verschieben der Steuerscheibe 10 bzw. der Segmente 27 mit der Komponente in Radialrichtung bezüglich der Achse 6 verändert sein und/oder durch Schwenken der Steuerscheibe 10 um eine Achse, die parallel und in dem Abstand zur Achse 6 angeordnet ist, verändert sein.

Bei diesem Ausführungsbeispiel gemäß der Fig. 10 wird die Blende vollständig durch die diversen Segmente 27, konkret die sechs veranschaulichten Segmente 27 gebildet.

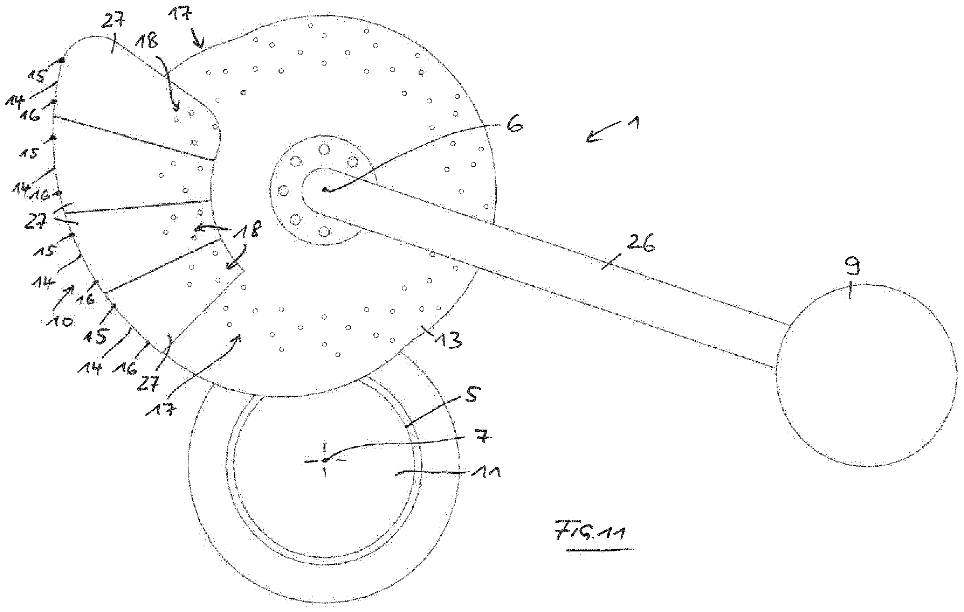

Das Ausführungsbeispiel gemäß der Fig. 11 unterscheidet sich von demjenigen nach der Fig. 10 dadurch, dass statt der sechs Segmente 27 nur vier Segmente 27 vorgesehen sind und die Funktion der sonst vorhandenen beiden anderen Segmente durch eine entsprechende Gestaltung der Basisscheibe 13 bewirkt wird, wobei die Basisscheibe 13 in diesem Fall in Richtung der Auslauföffnung 10 verändert ist und damit auch in demjenigen Bereich, in dem keine Segmente 27 vorgesehen sind, die Funktion der Blende übernimmt. Bei allen anderen beschriebenen Ausführungsformen kann die Basisscheibe 13, unabhängig von der Hubhöhe des Schwimmers 9, nicht in den Bereich der Öffnung 11 gelangen und zu deren Abblendung beitragen.

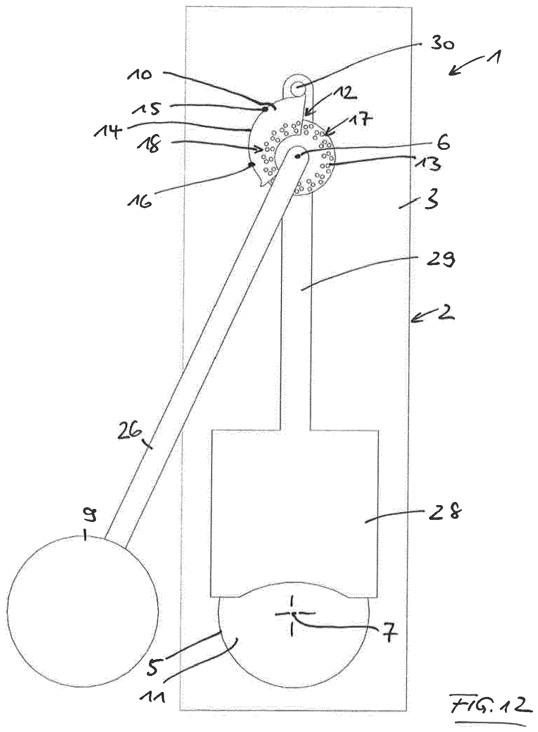

Das Ausführungsbeispiel nach der Fig. 12 zeigt einen Abflussmengenregler 1, bei dem die Steuerscheibe 10 und die dort mit der Bezugsziffer 28 bezeichnete Blende funktional getrennt sind. Bei diesem Ausführungsbeispiel ist der Schwimmer 9 gleichfalls über den Hebelarm 26 fest mit der Basisscheibe 13 im Bereich deren Rotationsachse 6 verbunden und es ist mit der Basisscheibe 13 die Steuerscheibe 10 verbunden, wie es zum Ausführungsbeispiel nach der Fig. 11 veranschaulicht ist, allerdings für eine einteilige Steuerscheibe 10. Wegen der Verbindung von Steuerscheibe 10 und Basisscheibe 13 wird auf die vorstehenden Ausführungen zu den anderen Ausführungsbeispielen verwiesen.

Die Steuerscheibe 10 kontaktiert im Bereich deren Steuerkurve 14 eine vertikal angeordneten Aufhängung 29 in Art einer Stange und es ist mit der Aufhängung 29 in deren unteren Bereich die Blende 28 fest verbunden. Die Aufhängung 29 ist vertikal geführt, sodass die Blende 28 ausschließlich vertikal gehoben und gesenkt werden kann, je nach der Auflagestelle eines horizontal angeordneten Lagerstifts 30 der Aufhängung 29 auf der Steuerscheibe 10 im Bereich deren Steuerkurve 14.

### Bezugszeichenliste

1 Abflussmengenregler
2 Basiselement
3 Grundplatte
4 Lagerachse
5 Rohrstutzen
6 Achse
7 Achse
8 Verstärkungsblech
9 Schwimmer
10 Steuerscheibe
11 Öffnung
12 Mittel
13 Basisscheibe
14 Steuerkurve
15 Punkt
16 Punkt
17 Lochmuster
18 Lochmuster
19 Schraube
20 Durchgangsschlitz
21 Stift
22 Stellschraube
23 Mutter
24 Schraubenkopf
25 Kontermutter
26 Hebelarm
27 Segment
28 Blende
29 Aufhängung
30 Lagerstift

## Patentansprüche

1. Abflussmengenregler (1) für einen Auslauf eines Flüssigkeitsbehälters, insbesondere für einen Auslauf eines Beckens, wobei der Abflussmengenregler (1) einen Schwimmer (9) und eine mittels des Schwimmers (9) ansteuerbare Blende (10; 28) zum veränderlichen Abblenden einer Auslauföffnung (11) für die Flüssigkeit aufweist, sowie mit Mitteln (12) zum Verändern der Abflusscharakteristik der Blende (10; 28), wobei die Mittel (12) eine vom Schwimmer (9) ansteuerbare, um eine stationäre, horizontal angeordnete Achse (6) schwenkbare Basisscheibe (13) und eine in unterschiedlichen Positionen bezüglich dieser Basisscheibe (13) anordbare, mit der Basisscheibe (13) verbundene Steuerscheibe (10) aufweisen, wobei die Steuerscheibe (10) mit einer Steuerkurve (14) versehen ist, **dadurch gekennzeichnet, dass** die Steuerscheibe (10) derart in den unterschiedlichen Positionen mit der Basisscheibe (13) verbindbar ist, dass der Abstand mehrerer Punkte (15, 16) der Steuerkurve (14) zur Achse (6) der Basisscheibe (13) verändert ist.

2. Abflussmengenregler nach Anspruch 1, **dadurch gekennzeichnet, dass** der Abstand der mehreren Punkte (15, 16) der Steuerkurve (14) zur Achse (6) der Basisscheibe (13) durch Verschieben der Steuerscheibe (10) mit einer Komponente in Radialrichtung bezüglich der Achse (6) der Basisscheibe (13) verändert ist.

3. Abflussmengenregler nach Anspruch 2, **dadurch gekennzeichnet, dass** der Abstand der mehreren Punkte (15, 16) der Steuerkurve (14) zur Achse (6) der Basisscheibe (13) durch Verschieben der Steuerscheibe (10) in Radialrichtung bezüglich der Achse (6) der Basisscheibe (13) verändert ist.

4. Abflussmengenregler nach einem der Ansprüche 1 bis 3, **dadurch gekennzeichnet, dass** der Abstand der mehreren Punkte (15, 16) der Steuerkurve (14) zur Achse (6) der Basisscheibe (13) durch Schwenken der Steuerscheibe (10) um eine Achse, die parallel und in Abstand zur Achse (6) der Basisscheibe (13) angeordnet ist, verändert ist.

5. Abflussmengenregler nach einem der Ansprüche 1 bis 4, **dadurch gekennzeichnet, dass** die Basisscheibe (13) und die Steuerscheibe (10) in einem Überlappungsbereich jeweils ein Lochmuster (17, 18) aufweisen und die Basisscheibe (13) und die Steuerscheibe (10) entsprechend der Lochanordnung der Lochmuster (17, 18) in unterschiedlichen Stellungen mittels Verbindungsmitteln miteinander verbindbar sind.

6. Abflussmengenregler nach einem der Ansprüche 1 bis 4, **dadurch gekennzeichnet, dass** die Basisscheibe (13) und die Steuerscheibe (10) überlappend ineinander verschieblich gelagert sind und in der Bassischeibe (13) und der Steuerscheibe (10) gelagerte Mittel (22) zum Verstellen der Steuerscheibe (10) bezüglich der Basisscheibe (13) vorgesehen sind.

7. Abflussmengenregler nach einem der Ansprüche 1 bis 6, **dadurch gekennzeichnet, dass** die Basisscheibe (13) bewegungsgekoppelt mit dem Schwimmer (9) ist.

8. Abflussmengenregler nach Anspruch 7, **dadurch gekennzeichnet, dass** die Basisscheibe (13) fest mit dem Schwimmer (9) verbunden ist, insbesondere der Schwimmer (9) unmittelbar mit der Basisscheibe (13) verbunden oder der Schwimmer (9) über einen mit diesem verbundenen Hebel (26) mit der Basisscheibe (13) verbunden ist.

9. Abflussmengenregler nach einem der Ansprüche 1 bis 8, **dadurch gekennzeichnet, dass** die Steuerscheibe (10) die Blende bildet und die Steuerkurve (14) eine Abblendkante der Blende bildet.

10. Abflussmengenregler nach Anspruch 9, **dadurch gekennzeichnet, dass** die Steuerscheibe (10) sich mit deren Steuerkurve über einen Teilkreis erstreckt, insbesondere sich über maximal einen Viertelkreis erstreckt.

11. Abflussmengenregler nach einem der Ansprüche 1 bis 8, **dadurch gekennzeichnet, dass** eine vertikal angeordnete Aufhängung (29), in einem oberen Bereich der Aufhängung (29), die Steuerscheibe (10) im Bereich deren Steuerkurve (14) kontaktiert, sowie mit der Aufhängung (29), in einem unteren Bereich der Aufhängung (29), die Blende (28) fest verbunden ist.

12. Abflussmengenregler nach einem der Ansprüche 1 bis 11, **dadurch gekennzeichnet, dass** die Steuerkurve (14) ohne Wendepunkt oder mit Wendepunkt ausgebildet ist.

13. Abflussmengenregler nach einem der Ansprüche 1 bis 12, **dadurch gekennzeichnet, dass** die Steuerscheibe (10) durch mehrere in Schwenkrichtung der Steuerscheibe (10) nebeneinander angeordnete Segmente (27) gebildet ist.

## Claims

1. Flow rate regulator (1) for an outlet of a liquid container, in particular for an outlet of a basin, wherein the flow rate regulator (1) has a float (9) and has a screen (10; 28) which can be actuated by means of the float (9) and which serves to variably screen off an outlet opening (11) for the liquid, and with means (12) for varying the flow characteristics of the screen (10; 28), wherein the means (12) have a base disc (13), which can be actuated by the float (9) and is pivotable about a stationary, horizontally arranged axis (6), and a control disc (10), which is connected to the base disc (13) and can be arranged in different positions with respect to this base disc (13), wherein the control disc (10) is provided with a control curve (14), **characterized in that** the control disc (10) is connectable to the base disc (13) in the different positions in such a way that the distance of several points (15, 16) of the control curve (14) from the axis (6) of the base disc (13) is varied.

2. Flow rate regulator according to Claim 1, **characterized in that** the distance of the several points (15, 16) of the control curve (14) from the axis (6) of the base disc (13) is varied by movement of the control disc (10) with a component in a radial direction with respect to the axis (6) of the base disc (13).

3. Flow rate regulator according to Claim 2, **characterized in that** the distance of the several points (15, 16) of the control curve (14) from the axis (6) of the base disc (13) is varied by movement of the control disc (10) in a radial direction with respect to the axis (6) of the base disc (13).

4. Flow regulator according to one of Claims 1 to 3, **characterized in that** the distance of the several points (15, 16) of the control curve (14) from the axis (6) of the base disc (13) is varied by pivoting of the control disc (10) about an axis that is arranged parallel to and at a distance from the axis (6) of the base disc (13).

5. Flow rate regulator according to one of Claims 1 to 4, **characterized in that** the base disc (13) and the control disc (10) each have a pattern of holes (17, 18) in an overlap region, and the base disc (13) and the control disc (10) are connectable to each other in different positions by connecting means according to the hole arrangement of the patterns of holes (17, 18).

6. Flow rate regulator according to one of Claims 1 to 4, **characterized in that** the base disc (13) and the control disc (10) are mounted movably in each other with an overlap, and means (22) mounted in the base disc (13) and in the control disc (10) are provided for adjusting the control disc (10) with respect to the base disc (13).

7. Flow rate regulator according to one of Claims 1 to 6, **characterized in that** the base disc (13) is coupled in terms of movement to the float (9).

8. Flow rate regulator according to Claim 7, **characterized in that** the base disc (13) is fixedly connected to the float (9), in particular the float (9) is connected directly to the base disc (13), or the float (9) is connected to the base disc (13) via a lever (26) connected thereto.

9. Flow rate regulator according to one of Claims 1 to 8, **characterized in that** the control disc (10) forms the screen, and the control curve (14) forms a screening edge of the screen.

10. Flow rate regulator according to Claim 9, **characterized in that** the control disc (10) extends with its control curve over part of a circle, in particular over at most a quarter of a circle.

11. Flow rate regulator according to one of Claims 1 to 8, **characterized in that** a vertically arranged suspension means (29), in an upper region of the suspension means (29), contacts the control disc (10), in the region of the control curve (14) of the latter, and the screen (28) is fixedly connected to the suspension means (29), in a lower region of the suspension means (29).

12. Flow rate regulator according to one of Claims 1 to 11, **characterized in that** the control curve (14) is configured without a turning point or with a turning point.

13. Flow rate regulator according to one of Claims 1 to 12, **characterized in that** the control disc (10) is formed by a plurality of segments (27) arranged next to one another in the direction of pivoting of the control disc (10).

## Revendications

1. Régulateur de débit d'écoulement (1) pour une sortie d'un récipient de liquide, en particulier pour une sortie d'un bassin, dans lequel le régulateur de débit d'écoulement (1) présente un flotteur (9) et un volet (10; 28) pouvant être commandé au moyen du flotteur (9) pour l'obturation variable d'une ouverture de sortie (11) pour le liquide, ainsi qu'avec des moyens (12) pour faire varier la caractéristique d'écoulement du volet (10; 28), dans lequel les moyens (12) présentent un disque de base (13) pouvant être commandé par le flotteur (9) et pouvant pivoter autour d'un axe stationnaire (6) disposé horizontalement et un disque de commande (10) pouvant être disposé dans différentes positions par rapport à ce disque de base (13) et relié au disque de base (13), dans lequel le disque de commande (10) est muni d'une came de commande (14), **caractérisé en ce que** le disque de commande (10) peut être relié au disque de base (13) dans les différentes positions, de telle manière que la distance de plusieurs points (15, 16) de la came de commande (14) à l'axe (6) du disque de base (13) soit modifiée.

2. Régulateur de débit d'écoulement selon la revendication 1, **caractérisé en ce que** la distance des multiples points (15, 16) de la came de commande (14) à l'axe (6) du disque de base (13) est modifiée par déplacement du disque de commande (10) avec une composante en direction radiale par rapport à l'axe (6) du disque de base (13).

3. Régulateur de débit d'écoulement selon la revendication 2, **caractérisé en ce que** la distance des multiples points (15, 16) de la came de commande (14) à l'axe (6) du disque de base (13) est modifiée par déplacement du disque de commande (10) en direction radiale par rapport à l'axe (6) du disque de base (13).

4. Régulateur de débit d'écoulement selon l'une quelconque des revendications 1 à 3, **caractérisé en ce que** la distance des multiples points (15, 16) de la came de commande (14) à l'axe (6) du disque de base (13) est modifiée par pivotement du disque de commande (10) autour d'un axe, qui est disposé parallèlement et à distance de l'axe (6) du disque de base (13).

5. Régulateur de débit d'écoulement selon l'une quelconque des revendications 1 à 4, **caractérisé en ce que** le disque de base (13) et le disque de commande (10) présentent respectivement un motif de trous (17, 18) dans une zone de recouvrement et le disque de base (13) et le disque de commande (10) peuvent être reliés l'un à l'autre avec des moyens de liaison dans différentes positions selon l'agencement des trous des motifs de trous (17, 18).

6. Régulateur de débit d'écoulement selon l'une quelconque des revendications 1 à 4, **caractérisé en ce que** le disque de base (13) et le disque de commande (10) sont montés en recouvrement de façon déplaçable l'un dans l'autre et il est prévu dans le disque de base (13) et dans le disque de commande (10) des moyens montés sur palier pour le déplacement du disque de commande (10) par rapport au disque de base (13).

7. Régulateur de débit d'écoulement selon l'une quelconque des revendications 1 à 6, **caractérisé en ce que** le disque de base (13) est cinématiquement couplé au flotteur (9).

8. Régulateur de débit d'écoulement selon la revendication 7, **caractérisé en ce que** le disque de base (13) est fixement relié au flotteur (9), en particulier le flotteur (9) est relié directement au disque de base (13) ou le flotteur (9) est relié au disque de base (13) par un levier (26) relié à celui-ci.

9. Régulateur de débit d'écoulement selon l'une quelconque des revendications 1 à 8, **caractérisé en ce que** le disque de commande (10) forme le volet et la came de commande (14) forme une arête d'obturation du volet.

10. Régulateur de débit d'écoulement selon la revendication 9, **caractérisé en ce que** le disque de commande (10) s'étend avec sa came de commande sur une partie de cercle, en particulier s'étend au maximum sur un quart de cercle.

11. Régulateur de débit d'écoulement selon l'une quelconque des revendications 1 à 8, **caractérisé en ce qu'**une suspension (29) disposée verticalement contacte, dans une région supérieure de la suspension (29), le disque de commande (10) dans la région de sa came de commande (14), et le volet (28) est fixement assemblé à la suspension (29) dans une région inférieure de la suspension (29).

12. Régulateur de débit d'écoulement selon l'une quelconque des revendications 1 à 11, **caractérisé en ce que** la came de commande (14) est réalisée sans point d'inflexion ou avec point d'inflexion.

13. Régulateur de débit d'écoulement selon l'une quelconque des revendications 1 à 12, **caractérisé en ce que** le disque de commande (10) est formé par plusieurs segments (27) disposés l'un à côté de l'autre dans la direction de pivotement du disque de commande (10).
